**Europäisches Patentamt**

**European Patent Office**

**Office européen des brevets**

(19)

(11) Veröffentlichungsnummer: **0 382 726 B1**

(12) **EUROPÄISCHE PATENTSCHRIFT**

(45) Veröffentlichungstag der Patentschrift: **09.12.92**

(21) Anmeldenummer: **88905198.3**

(22) Anmeldetag: **09.06.88**

(86) Internationale Anmeldenummer:
**PCT/EP88/00512**

(87) Internationale Veröffentlichungsnummer:
**WO 89/00630 (26.01.89 89/03)**

(51) Int. Cl.5: **E02F 3/88**, E02F 3/90,
E02F 3/92, E02F 5/28,
E02F 7/02, E02F 7/06

(54) **VERFAHREN UND VORRICHTUNG ZUM BAGGERN VON SCHLICK AUS HAFEN, WASSERSTRASSEN ODER DERGLEICHEN.**

(30) Priorität: **22.07.87 DE 3724251**

(43) Veröffentlichungstag der Anmeldung:
**22.08.90 Patentblatt 90/34**

(45) Bekanntmachung des Hinweises auf die
Patenterteilung:
**09.12.92 Patentblatt 92/50**

(84) Benannte Vertragsstaaten:
**AT BE CH DE FR GB IT LI LU NL SE**

(56) Entgegenhaltungen:
EP-A- 9 516          DE-A- 2 413 738
FR-A- 1 270 641      GB-A- 355 005
GB-A- 836 101        GB-A- 2 128 663
US-A- 1 840 606      US-A- 3 161 438

(73) Patentinhaber: **O & K ORENSTEIN & KOPPEL AG**
**Brunsbütteler Damm 144-208**
**W-1000 Berlin 20(DE)**

(72) Erfinder: **JOHANNSEN, Karl**
**An der Baak 19b**
**W-2400 Lübeck-Travemünde(DE)**
Erfinder: **KRÜGER, Rolf**
**Talweg 12**
**W-2400 Lübeck(DE)**
Erfinder: **STEINKÜHLER, Siegfried**
**Mühlenteich 65**
**W-2407 Bad Schwartau(DE)**

**Beschreibung**

Die Erfindung betrifft ein Verfahren zum Baggern von Schlick aus Häfen, Wasserstraßen oder dgl. mit Hilfe eines an einem Baggerschiff höhenverstellbar und einstellbar gelagerten Schräghochförderers in Verbindung mit einem Aufnahmekopf.

Zum Baggern von Häfen, Wasserstraßen oder dergleichen sind Eimerkettenbagger, Schleppsaugkopfbagger und andere Bagger bekannt, bei denen der Schlick mechanisch oder unter Verwendung von Druckwasser aufgenommen und über Schräghochförderer unterschiedlicher Baufrom nach oben in Baggerschuten oder zur Verspülung auf Absetzflächen weiter befördert wird. Bei allen diesen bekannten verfahrbaren Vorrichtungen werden Grabvorrichtungen wie eben Eimerleitern, Schaufelräder, Schneidräder oder dergleichen oder auch Saugköpfe verwendet, die zum Lösen des Schlicks von dessen Oberfläche her aus dienen, wobei ggf. Druckwasser mit eingeführt werden kann. Dabei treten Wasserturbulenzen im Bereich der Grabköpfe bzw. Saugköpfe auf, die den Schlick mehr oder minder hochwirbeln und die abgesetzten Stoffe im Wasser verteilen.

Die DE-B-2 837 322 beschreibt so eine Vorrichtung zum Absaugen von Schlamm, der sich auf dem Grund von Fleeten, Kanälen oder anderen Gewässern befindet mit Hilfe eines Saugrohres, das am Ende einer Saugleitung angeordnet ist, die ihrerseits von einem Schiffskörper getragen wird. Bei dieser Vorrichtung ist, in Arbeitsrichtung gesehen, dem Saugmund ein Kehrgerät vorgeschaltet. Dies kann aus einem Schlitten und einem fest damit verbundenen Kehrvorsatz bestehen. Dabei kann dieser zwei walzenförmige Bürsten tragen, die antreibbar und parallel zueinander in einem Saugkasten gelagert sind. Dieser Saugkasten kann seinerseits an einer quer zu den Bürsten verlaufenden Stirnseite eine Öffnung für den Saugmund aufweisen. Dabei kann der schlittenartig ausgebildete Saugkasten auch mit Schwimmkörpern versehen sein, zwischen denen der Saugmund liegt.

Die DE-A-2 059 436 beschreibt einen Schlammbagger, dessen Schürforgan im wesentlichen aus einem rechteckigen Kasten gebildet ist, der in Seitenansicht einer Schlittenform gleicht und über den zu fördernden Moorast gezogen wird. Der Schlick wird nach dem Ablassen des Kastens und nach Einleitung der Ziehbewegung von dem Kasten aufgenommen. Zur Unterstützung der Aufnahme kann ein am Maul des Kastens angeordneter Elevator dienen. Mit dieser Maschine können ebene und etwas verdichtete Teichböden ausgehoben werden.

Die DE-A-3 150 993 beschreibt ein Verfahren zur Entsorgung von Gewässern von Sedimenten, insbesondere solchen, die mit Schadstoffen und organischen Bestandteilen belastet sind. Dabei werden die Sedimente vor Ort ausgehoben und anschließend mechanisch gesiebt. Das gesiebte Sediment wird maschinell entwässert, worauf dem entwässerten Sediment mindestens ein feinkörniger mineralischer Zuschlagstoff beigemischt wird. Diese Mischung wird granuliert getrocknet, worauf das Granulat gebrannt wird. Das geblähte, gebrannte Granulat wird weiter verarbeitet. Dieses Granulat kann als Leichtzuschlagstoff zur Herstellung von Baustoffen verwendet werden. Der Zuschlagstoff kann aus Ton, Flugasche oder dergleichen bestehen. Außerdem können dem Granulat noch Additive zugesetzt werden. Bei der mechanischen Aufbereitung kann das Überkorn abgetrennt und gesondert aufbereitet werden. Das aus der maschinellen Entwässerung anfallende Filterabwasser kann gereinigt und dem Gewässer wieder zurückgeführt werden.

Die DE-A-1 918 332 beschreibt ein Verfahren und eine Vorrichtung zum Fördern von in Flüssigkeit suspendierenden Feststoffen. Dazu ist ein Saugbagger vorgesehen, dem einen mit einem Saugrohr verbundenen Saugmund besitzt, wobei das Saugrohr mit einer Saugpumpe verbunden ist. In deren Abförderrohr mündet eine Zugabevorrichtung für ein Mittel zur Beschleunigung der Sedimentation der Materialgutfeststoffe. Als solche Mittel können Polyelektrolyte zugesetzt werden. Die Ablauföffnung des Förderrohres mündet über ein verhältnismäßig kurzes Förderband, das sich oberhalb einer Prahm befindet. An dem rücklaufenden Trum des Förderbandes legt sich ein Abschaber an, um das Abstreifen des Sedimentes vom Förderband zu sichern. In der Prahm soll sich das Sediment absetzen. Das überschüssige Wasser fließt ab. Nachteilig ist die notwendige Verwendung von zusätzlichen die Sedimentation beschleunigenden Mitteln.

Soweit keine die Sedimentation beschleunigenden Mittel verwendet werden, haben alle bekannten Entsorgungsverfahren den Nachteil, daß die natürliche Entwässerung des Schlickes sehr lange Zeit in Anspruch nimmt. Demzufolge werden auch große Grundflächen zur Ablagerung des Schlicks belegt, die für andere Zwecke verloren gehen. Soweit der Schlick bzw. das zu seiner Weiterleitung notwendige Transportwasser mit Schadstoffen belastet sind, können diese auch bei der Ablagerung in das Grundwasser gelangen.

Durch die GB-A-2 128 663 ist ein Saugkopfbagger bekannt, der ein an einem Schiffrumpf befestigtes Saugrohr aufweist, das an seinem wasserseitigen Ende mit einem Aufnahmekopf versehen ist. Über die gesamte Breite des Aufnahmekopfes sind in einem Rahmen gelagert Schneidmesser angeordnet, wobei der Rahmen über eine Vibrationseinrichtung in Schwingungen vorgegebener Frequenz versetzbar ist. Nachteilig an diesem Saugkopfbagger ist zu bemerken, daß hier lediglich Oberflächenbereiche des Bodens angeschnitten werden könne, so daß die mit angesaugte Wassermenge im Verhältnis zum aufgenommenen Boden sehr groß ist. Eventuelle Folgearbeiten, wie Entwässern, Trocknen oder dgl. gestalten sich somit verhältnismäßig aufwendig.

Der Erfindung liegt die Aufgabe zugrunde, daß bei der Aufnahme des Sedimentes von der Gewässersohle möglichst wenig Turbulenzen erzeugt werden und daß vor allem auch möglichst wenig zusätzliches Wasser gefördert wird, um eine Verdünnung des geförderten Schlicks zu vermeiden. Auch weiterhin soll bei der Trennung des Schlicks von Sand möglichst wenig Wasser benutzt werden, um die Kosten des Verfahrens und auch die mögliche Störung der Umwelt zu vermeiden. Die Aufbereitung und Trennung des Schlicks soll an Bord erfolgen. Die weitere Verarbeitung soll möglichst einfach sein.

Diese Aufgabe wird erfindungsgemäß dadurch gelöst, daß der Aufnahmekopf durch Unterschneidung einer Deckschicht dergestalt in den Schlick eingebracht und dort bewegt wird, daß die Deckschicht oberhalb des Aufnahmekopfes eine Trennschicht zwischen dem freien Wasser und der neu geschaffenen Oberfläche bildet, welche während des Vorschubes des Aufnahmekopfes auch aufrechterhalten bleibt und hinter dem Aufnahmekopf die neu geschaffene Oberfläche abdeckt, wobei der so unterhalb der Trennschicht hereingewonnene Schlick mit Hilfe des Aufnahmekopfes erfaßt und über den mechanischen Schräghochförderer abgeführt wird.

Gemäß der Erfindung wird das oberhalb der Gewässersohle abgelagerte Sediment so aufgenommen, daß nur ein Teil der Ablagerung im Unterschnitt durch den sich in Richtung auf den Schlick bewegenden Aufnahmekopf erfaßt wird. Dabei bleibt gleichsam eine Deckschicht des Schlickes erhalten, die oberhalb der oberen Schneidkante des Aufnahmekopfes liegt, über diesen hinweggleitet und als Trennschicht zwischen der neu geschaffenen Oberfläche und dem freien Wasser verbleibt. Damit wird das Auftreten von Turbulenzen im Wasser im Bereich des den Schlick aufnhmenden Kopfes vermieden, außerdem wird der Vorteil erzielt, daß nur sehr geringe Wassermengen transportiert werden müssen. Die oberhalb des Aufnahmekopfes verbleibende Trennschicht fließt entsprechend dem Baggervorschub über ein Leitblech über den Kopf hinweg und deckt die hinter dem Aufnahmekopf freigelegte Gewässersohle ab.

Gemäß einer Ausführungsform der Unteransprüche kann das späterhin notwendige Transportwasser am Ende des Aufnahmekopfes auf der Unterseite eingeleitet werden.

Die Schräghochförderung des Schlicks erfolgt mit mechanischen Fördermitteln, beispielsweise einem Schnecken- oder Kratzerkettenförderer.

Weitere Einzelheiten der Erfindung sind anhand der in der Zeichnung dargestellten Ausführungsformen der Erfindung erläutert und zwar zeigen

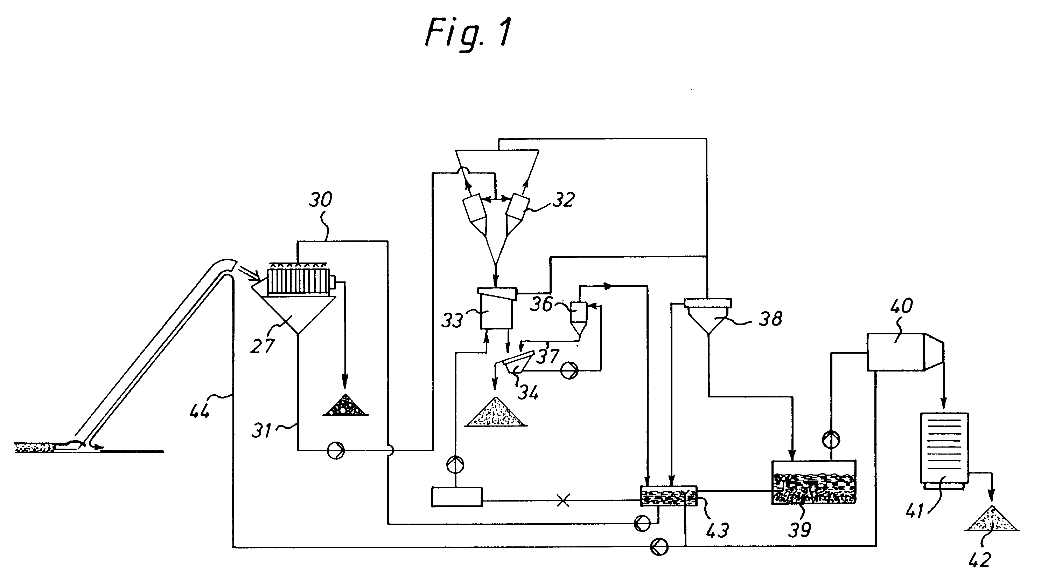

Fig. 1 - ein Verfahrensbild des erfindungsgemäßen Verfahrens

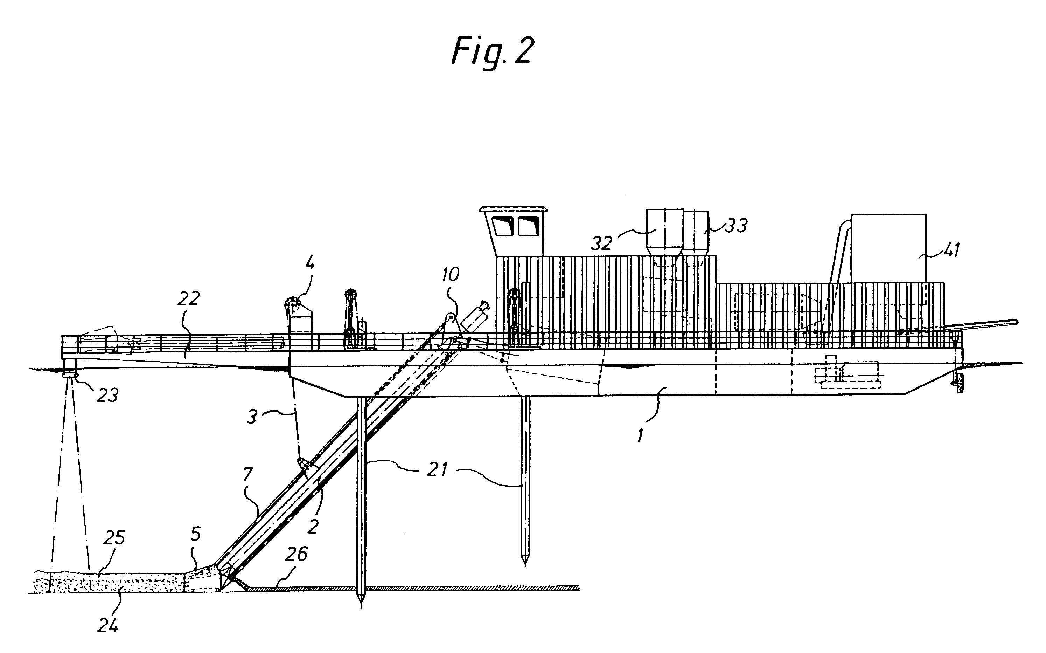

Fig. 2 - ein Baggerschiff zur Durchführung des erfindungsgemäßen Verfahrens in Seitenansicht

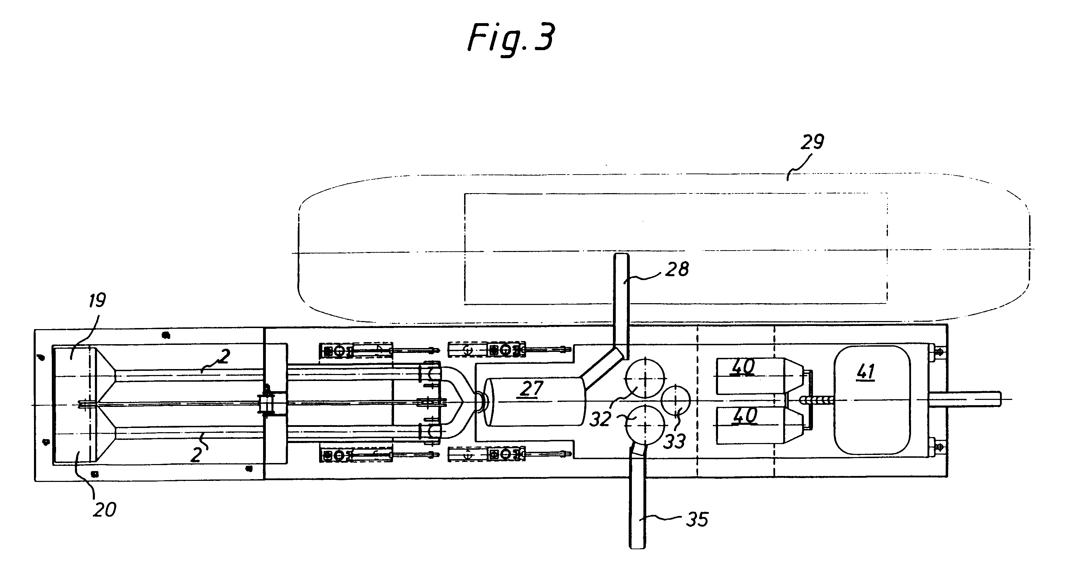

Fig. 3 - eine Aufsicht auf Fig. 2

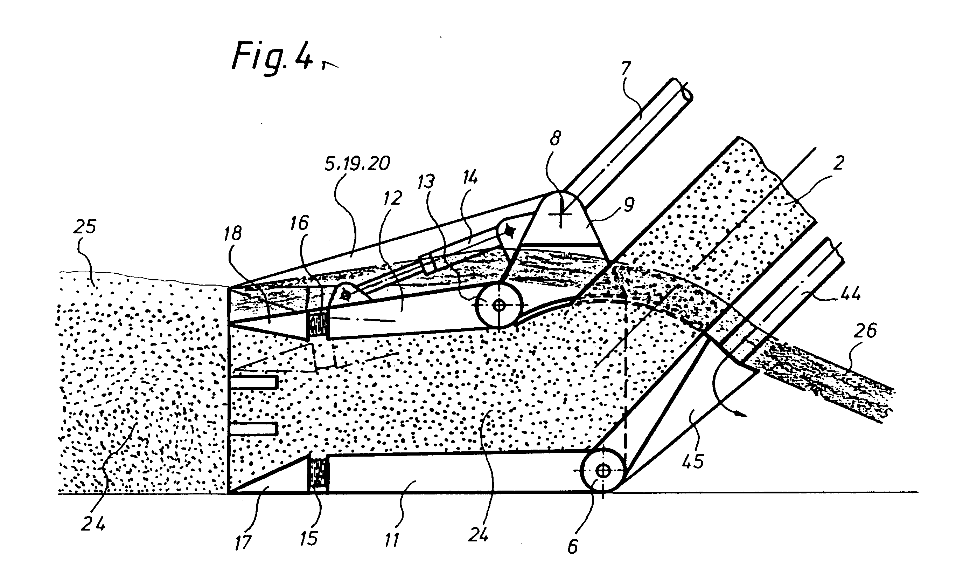

Fig. 4 - eine Seitenansicht des größer dargestellten Aufnahmekopfes gemäß Fig. 1 und 2

Das Baggerschiff 1 ist mit einem Förderrohr 2 versehen, das heb- und senkbar mittels eines Seilzuges 3 über die Seilwinde 4 aufgehängt ist.

An das vordere Ende des Förderrohres 2 ist der Aufnahmekopf 5 um eine horizontale Achse 6 schwenkbar befestigt. Zum Verschwenken dient ein Gestänge 7, das bei 8 an einer Lasche 9 angreift, die an einem Bauteil des Aufnahmekopfes 5 befestigt ist. Das Gestänge 7 führt zu einer Befestigungsvorrichtung 10, die am oberen Ende des Förderrohres 2 angeordnet ist. Das Gestänge 7 stellt eine Parallelführung dar, die dafür sorgt, daß unabhängig von der Baggertiefe, die untere Aufnahmekopfschneide immer horizontal geführt wird.

Diese untere Seite 11 des Aufnahmekopfes 5 ist mit dem Kopf fest verbunden. Die obere Seite 12 ist verschwenkbar um die Achse 13 angelenkt. Die Höhenlage der oberen Seite 12 des Aufnahmekopfes 5 wird mit Hilfe einer hydraulischen Verstelleinrichtung 14 je nach der gewünschten Schneiddicke eingestellt.

An der Unterseite 11 des Aufnahmekopfes 5 bzw. an der verstellbaren Oberseite 12 sind über Schwingelemente und Vibrationsantriebe 15,16 schwingende Schneidmesser 17,18 angeordnet. Die Seitenwände des Aufnahmekopfes 5 können gleicherweise mit vibrierenden Schneidmessern versehen sein. Auch ist es möglich, die Seitenwände in gleicher Weise wie die obere Seitenwand des Aufnahmekopfes verstellbar auszubilden.

Beim Ausführungsbeispiel liegen zwei Aufnahmeköpfe 19,20 nebeneinander. Sie bestreichen etwa eine Breite von mehreren Metern.

Zum Vorschub des Baggerschiffes 1 dienen Wanderpfähle 21, die nach Bedarf in der Gewässersohle eingesetzt werden und an denen das Baggerschiff 1 vorgezogen wird.

Am vorderen Teil des Baggerschiffes 1 ist über einen Ausleger 22 ein Echolot 23 befestigt.

Der weitere Aufbau des Baggerschiffes und seine Arbeitsweise sei im folgenden anhand der Beschreibung erläutert:

Die Schichtdicke des zu Fördernden Sedimentes (Schlick 24) wird vor dem Aufnahmekopf 5 mit Hilfe des Echolotes 23 gemessen, dabei wird zugleich die Lage der Gewässersohle bestimmt. In Abhängigkeit von der Schichtdicke wird die Eintrittshöhe des Aufnahmekopfes 5 so verstellt und die Vorschubgeschwindigkeit des Baggerschiffes 1 so geregelt, daß nur die gewollte eingestellte Schlick-Teilmenge 24 des Sedimentes in den Aufnahmekopf 5 gedrückt wird. Die oberhalb dieser Sedimentmenge liegende Deckschicht 25 des Sedimentes 24 bleibt als Restdeckschicht (Trennschicht 26) liegen und gleitet bei dem Vorschub des Baggers an den Aufnahmeköpfen 19,20 und dem Förderrohr 2 vorbei und legt sich hinter den Aufnahmeköpfen wieder auf die Gewässersohle ab. Bei dieser Förderung des Schlickes 24 wird nur das Sediment aufgenommen. Eine Verdünnung des Sedimentes durch Umgebungswasser und eine Verschmutzung des Umgebungswassers durch Turbulenzen beim Abtransport werden vermieden.

Das aufgenommene Sediment wird im Förderrohr 2 durch einen nicht weiter dargestellten Schneckenförderer oder Kratzerförderer oder einen anderen geeigneten mechanischen Förderer schräg nach oben befördert und gelangt zum Grobgutabscheider 27. Das abgetrennte Grobgut fließt über eine Schurre 28 in eine Prahm 29 ab.

Zur Grobgutabscheidung kann ein Trommelsieb oder jede andere geeignete Vorrichtung verwendet werden.

Während des Hochtransportes des geförderten Schlickes wird dessen Dichte und dessen Zusammensetzung gemessen und nunmehr durch die Leitung 30 soviel Prozeßwasser zugeführt, daß das durch die Leitung 31 abfließende Schlick-Wassergemisch pumpfähig und in an sich bekannten Schlickabscheider (Hydro-Zyklonen 32) trennfähig wird.

Der aus den Hydro-Zyklonen 32 abfließende Sand wird in einen Aufstromklassierer 33 geleitet und dort aufbereitet. Von dem Aufstromklassierer 33 fließt der Sand über ein Entwässerungssieb 34, wobei der gewonnene Sand über die Rinne 35 in nicht dargestellte Schuten abgeleitet wird.

Der beschriebenen Sandtrennung folgt nunmehr die Schlickentwässerung.

Aus den Hydro-Zyklonen 32 wird der Schlick ggf. über einen Eindicker 38 und ein Absetzbecken 39 bzw. einen Zwischenspeicher zur Zentrifuge 40 geführt. Der dort getrocknete Schlick wird in einen abgasbeheizten Trockner 41 überführt und als Schluff bei 42 abgezogen. Der getrocknete Schluff kann dann z.B. mit Selbstentladeschuten zu Hochdeponien transportiert werden, hier erfolgt die Entlagerung oder die Dekontaminierung.

Das überschüssige Prozeßwasser, das in dem Pumpensumpf 43 aus allen möglichen Anfallstellen gesammelt wird, kann von dort aus über die Rückführleitung 44 zu den Abströmöffnungen 45 zurückgeführt werden, die auf der Rückseite und Unterseite des Aufnahmekopfes 5 bzw. 19,20 angeordnet sind.

Das erfindungsgemäße Verfahren hat den Vorteil, daß das Sediment nur mit dem in ihm enthaltenen Porenwasser gefördert und daß zur Bearbeitung des Schlicks nur eine verhältnismäßig geringe Prozeßwassermenge benötigt wird, die, ohne daß besondere Turbulenzen entstehen, am Aufnahmekopf wieder in das Gewässer zurückgeführt werden kann.

Zur Heizung der Trockner 41 kann die Abgasanlage der an Bord vorhandenen Dieselmotoren dienen.

**Patentansprüche**

1. Verfahren zum Baggern von Schlick aus Häfen, Wasserstraßen oder dgl. mit Hilfe eines an einem Baggerschiff (1) höhenverstellbar und einstellbar gelagerten Schräghochförderers(2) in Verbindung mit einem Aufnahmekopf (5,19,20), dadurch gekennzeichnet, daß der Aufnahmekopf (5,19,20) durch Unterschneidung einer Deckschicht (25) dergestalt in den Schlick (24) eingebracht und dort bewegt wird, daß die Deckschicht (25) oberhalb des Aufnahmekopfes (5,19,20) eine Trennschicht (26) zwischen dem freien Wasser und der neu geschaffenen Oberfläche bildet, welche während des Vorschubes des Aufnahmekopfes (5,19,20) auch aufrechterhalten bleibt und hinter dem Aufnahmekopf die neu geschaffene Oberfläche abdeckt, wobei der so unterhalb der Trennschicht (26) hereingewonnene Schlick (24) mit Hilfe des Aufnahmekopfes (5,19,20) erfaßt und über den mechanischen Schräghochförderer (2) abgeführt wird.

2. Verfahren nach Anspruch 1, dadurch gekennzeichnet, daß mit Hilfe eines vor dem Aufnahmekopf (5,19,20) angeordneten Echolotes (23) die Schlickhöhe und die Lager der Gewässersohle festgestellt und danach die Absenktiefe des Aufnahmekopfes (5,19,20) und dessen verstellbare Schnitthöhe entsprechend der gemessenen Schlickhöhe eingestellt wird.

3. Verfahren nach Anspruch 1 und 2, dadurch gekennzeichnet, daß die Vorschubgeschwindigkeit des Baggerschiffes (1) in Abhängigkeit von der im Schräghochförderer (Förderrohr (2)) abgeführten Materialmenge so geregelt wird, daß Turbulenzen am Aufnahmekopf (5,19,20) vermieden werden.

4. Verfahren nach Anspruch 1 bis 3, dadurch gekennzeichnet, daß der geförderte Schlick über einen Grobgutabscheider (27) geführt wird.

5. Verfahren nach Anspruch 1 bis 4, dadurch gekennzeichnet, daß der Grobgutabscheider (27) ein Trommelsieb ist.

6. Verfahren nach Anspruch 1 bis 5, dadurch gekennzeichnet, daß die Schlickdichte und der Schlickgehalt an organischem Sediment gemessen und nach oder während der Grobgutabscheidung soviel Prozeßwasser zugesetzt wird, daß der Schlick pumpfähig und im an sich bekannten Schlickabscheider (Hydro-Zyklonen (32)) abscheidefähig wird.

7. Verfahren nach Anspruch 1 bis 6, dadurch gekennzeichnet, daß das Prozeßwasser in Bezug auf die Vorschubrichtung des Aufnahmekopfes (5,19,20) gesehen, an dessen Ende unter die auf der Gewässersohle verbleibende Schlickdecke zurückgeführt (26) wird.

8. Verfahren nach Anspruch 1 bis 7, dadurch gekennzeichnet, daß der Schluff getrocknet wird, wobei die Abgaswärme der Borddieselmotoren zur Trocknung verwendet wird.

9. Baggerschiff mit einem Schräghochförderer (2), der an seinem wasserseitigen Ende mit einem verstellbare Schneidmesser (17,18) aufweisenden Aufnahmekopf (5,19,20) versehen ist, zur Durchführung des Verfahrens nach den Ansprüchen 1 bis 8, dadurch gekennzeichnet, daß der Abstand der Schneidmesser (17,18) zur Einstellung unterschiedlicher Teilmengen an Schlick (24) veränderbar ist, wobei die Schneidmesser (17,18) mit hydraulisch gesteuerten Verstelleinrichtungen (14) versehen sind, und daß eine oberhalb des Aufnahmekopfes (5,19,20) bzw. der Schneidmesser (18) verbleibende Trennschicht (26) entsprechend der Vorschubgeschwindigkeit des Baggerschiffes (1) über ein mit dem Aufnahmekopf (5,19,20) verbundenes Leitblech führbar ist.

10. Baggerschiff nach Anspruch 9, dadurch gekennzeichnet, daß die Schneidmesser (17,18) mit regelbaren Virbrationsantrieben (15,16) versehen sind.

11. Baggerschiff nach Anspruch 9 und 10, dadurch gekennzeichnet, daß in Vorschubrichtung des Aufnahmekopfes (5,19,20) gesehen, an dessen hinteren Ende und an der Unterseite die Rückführungsleitung (44) für das Prozeßwasser mündet.

**Claims**

1. Process for dredging silt from ports, waterways or the like by means of an inclined conveyor (2) which is adjustably mounted on a dredger vessel (1) so as to be adjustable in height, in conjunction with a pick-up head (5,19,20), characterised in that the pick-up head (5,19, 20), by undercutting of a covering layer (25), is introduced into and moved in the silt (24) in such a way that the covering layer (25) above the pick-up head (5,19,20) forms a separating layer (26) between the open water and the newly created surface which is also maintained during the advance of the pick-up head (5,19,20) and behind the pick-up head covers over the newly created surface, the silt (24) thus extracted beneath the separating layer (26) being taken up by means of the pick-up head (5,19,20) and led off by way of the mechanical inclined conveyor (2).

2. Process according to Claim 1, characterized in that by means of a depth sounder (23) arranged in front of the pick-up head (5,19,20), the depth of the silt and the position of the bottom of the stretch of water are determined and then the lowering depth of the pick-up head (5,19,20) and its adjustable cutting height are set according to the measured depth of the silt.

3. Process according to Claims 1 and 2, characterised in that the advance speed of the dredger vessel (1) is so regulated in response to the amount of material led off in the inclined conveyor (conveyor pipe (2)) that turbulence at the pick-up head (5,19,20) is avoided.

4. Process according to Claims 1 to 3, characterised in that the conveyed silt is led through a coarse material separator (27).

5. Process according to Claims 1 to 4, characterised in that the coarse material separator (27) is a drum screen.

6. Process according to Claims 1 to 5, characterised in that the silt density and the content of organic sediment in the silt are measured and after or during the separation of coarse material an amount of process water is added such that the silt is capable of being pumped and of being separated in the silt separator (hydro-cyclones (32)) which is known per se.

7. Process according to Claims 1 to 6, characterised in that the process water, seen in relation to the direction of advance of the pick-up head (5,19,20), is returned to the end of the latter beneath the covering of silt (26) remaining on the bottom of the stretch of water.

8. Process according to Claims 1 to 7, characterised in that the coarse clay is dried, the waste gas heat of the inboard diesel engines being used for drying.

9. Dredger vessel with an inclined conveyor (2), which is provided at its end nearest the water with a pick-up head (5,19,20), having adjustable cutting blades (17,18), for the implementation of the process according to Claims 1 to 8, characterised in that the spacing of the cutting blades (17,18) is variable in order to set different amounts of silt (24), the cutting blades (17,18) being provided with hydraulically controlled adjusting devices (14), and that a separating layer (26) remaining above the pick-up head (5,19,20) or the cutting blades (18) can be guided, corresponding to the speed of advance of the dredger vessel (1), over a guide plate connected to the pick-up head (5,19,20).

10. Dredger vessel according to Claim 9, characterised in that the cutting blades (17,18) are provided with controllable vibratory drives (15,16).

11. Dredger vessel according to Claims 9 and 10, characterised in that, seen in the direction of advance of the pick-up head (5,19,20), there opens at the rear end of the latter and on the underside the return pipeline (44) for the process water.

**Revendications**

1. Procédé pour draguer la vase de ports, voies navigables ou similaires, à l'aide d'un transporteur incliné ascendant (2) monté réglable en hauteur et ajustable sur un bateau dragueur (1), en combinaison avec une tête d'enlèvement (5, 19, 20), caractérisé en ce que la tête d'enlèvement (5, 19, 20) est engagée et mue dans la vase (24), pendant qu'elle effectue une coupe sous une couche de recouvrement (25), de manière que cette couche de recouvrement (25) forme, au-dessus de la tête d'enlèvement (5, 19, 20), une couche de séparation (26) entre l'eau libre et la surface supérieure nouvellement créée de la vase, couche de séparation qui est également maintenue intacte pendant l'avance de la tête d'enlèvement (5, 19, 20) et qui, derrière la tête d'enlèvement, recouvre la surface qui vient d'être créée par l'enlèvement de la vase (24) ainsi dégagée sous la couche de séparation (26), saisie à l'aide de la tête d'enlèvement (5, 19, 20) et évacuée par le transporteur incliné ascendant (2), de type mécanique.

2. Procédé selon la revendication 1, caractérisé en ce que l'on détermine la hauteur ou épaisseur de la vase et l'emplacement du lit du cours d'eau ou du plan d'eau à l'aide d'un échosondeur (23) placé devant la tête d'enlèvement (5, 19, 20) et on ajuste ensuite la profondeur d'immersion de la tête d'enlèvement (5, 19, 20) et sa hauteur de coupe réglable en fonction de la hauteur de vase mesurée.

3. Procédé selon les revendications 1 et 2, caractérisé en ce que l'on règle la vitesse d'avance du bateau dragueur (1) en fonction de la quantité de matériau évacuée dans le transporteur incliné ascendant (élinde (2)), de manière à éviter des turbulences au droit de la tête d'enlèvement (5, 19, 20).

4. Procédé selon les revendications 1 à 3, caractérisé en ce que l'on fait passer la vase extraite à travers un séparateur de matériau grossier (27).

5. Procédé selon les revendications 1 à 4, caractérisé en ce que le séparateur de matériau grossier (27) est un tambour cribleur.

6. Procédé selon les revendications 1 à 5, caractérisé en ce que l'on mesure la masse volumique de la vase et la teneur de la vase en sédiment organique et on ajoute, après ou pendant la séparation de matériau grossier, la quantité d'eau de processus nécessaire pour que la vase puisse être pompée et séparée dans un séparateur de vase en lui-même connu (hydro-cyclones (32)).

7. Procédé selon les revendications 1 à 6, caractérisé en ce que l'eau de processus est réintroduite dans le cours d'eau ou le plan d'eau à l'arrière de la tête d'enlèvement (5, 19, 20), par rapport à la direction d'avance de cette tête, sous la couche de vase de recouvrement (26) restant sur le lit du cours ou du plan d'eau.

8. Procédé selon les revendications 1 à 7, caractérisé en ce que l'on sèche l'argile grossière en utilisant la chaleur des gaz d'échappement des moteurs diesel se trouvant à bord.

9. Bateau dragueur muni d'un transporteur incliné ascendant (2) qui est pourvu, à son extrémité destinée à être immergée dans l'eau, d'une tête d'enlèvement (5, 19, 20) comportant des lames coupantes (17, 18) réglables, pour la mise en oeuvre du procédé selon les revendications 1 à 8, caractérisé en ce que l'espacement des lames coupantes (17, 18) est variable pour l'ajustement de différentes quantités de vase (24) à enlever, les lames coupantes (17, 18) étant équipées de dispositifs de réglage (14) à commande hydraulique, et qu'une couche de séparation (26) résiduelle, formée au-dessus de la tête d'enlèvement (5, 19, 20) ou des lames coupantes (18), peut être guidée, suivant la vitesse d'avance du bateau dragueur (1) par une chicane reliée à la tête d'enlèvement (5, 19, 20).

10. Bateau dragueur selon la revendication 9, caractérisé en ce que les lames coupantes (17, 18) sont équipées d'entraînements réglables (15, 16) destinés à produire une vibration.

11. Bateau dragueur selon les revendications 9 et 10, caractérisé en ce que la conduite de retour (44) pour réintroduire l'eau de processus dans le cours ou le plan d'eau, débouche à l'extrémité arrière de la tête d'enlèvement (5, 19, 20), par rapport à la direction d'avance de cette tête, et sur le côté inférieur de celle-ci.

Fig. 1

Fig. 2

EP 0 382 726 B1

# Fig. 3

Fig. 4

EP 0 382 726 B1